# EUROPÄISCHE PATENTSCHRIFT

(11) **EP 1 334 931 B1**
(45) Veröffentlichungstag und Bekanntmachung des Hinweises auf die Patenterteilung: **22.12.2004**
(21) Anmeldenummer: 02025576.6
(22) Anmeldetag: 15.11.2002
(51) Int. Cl.: B65G 65/23

(54) **Vorrichtung zum dosierten Entnehmen von Beschichtungspulver aus einem Pulversack**
Arrangement for dosed dispensing of coating powder from a powder sack
Arrangement pour prelever des quantities partielles d'une composition de revêtement d'un sack de poudre

(30) Priorität: 02.02.2002 DE 10204370
(43) Veröffentlichungstag der Anmeldung: 13.08.2003
(73) Patentinhaber: Herget, Roland, 73114 Schlat (DE)
(72) Erfinder: Herget, Roland, 73114 Schlat (DE)
(74) Vertreter: Vetter, Ewald Otto

(56) Entgegenhaltungen:
- EP-A- 0 534 807
- WO-A-95/27675
- DE-A- 3 219 428
- DE-A- 3 538 782
- GB-A- 2 279 058
- US-A- 4 095 707
- US-A- 4 505 623
- US-A- 5 690 450

## Beschreibung

Die Erfindung betrifft eine Vorrichtung zum dosierten Entnehmen von Beschichtungspulver aus einem Pulversack gemäß dem Oberbegriff von Anspruch 1.

Eine Entleerungsvorrichtung zum Befestigen an einem Behälter, welcher beispielsweise Kunststoffpulver oder -granulat enthält, ist aus der WO 95/27675 gemäß des Oberbegriffs des Anspruchs 1 bekannt. Die Entleerungsvorrichtung der WO 95/27675 weist einen Trichter, eine Klemmvorrichtung zum Befestigen des Trichters an dem Behälter und Greifmittel auf. Ein Gabelstapler oder eine andere Drehvorrichtung kann am den Greifmitteln angreifen und sie zusammen mit dem Trichter und dem daran hängenden Behälter in eine umgekehrte Stellung drehen.

Der Begriff "Pulversack" wird hier stellvertretend für alle sackartigen und beutelartigen Behältnisse verwendet, welche aus leicht flexiblem Material bestehen, so daß ihr Endabschnitt, welcher eine Füll- und Entnahmeöffnung bildet, manuell leicht nach außen umgelegt oder umgestülpt werden kann. Ein solcher Pulversack besteht normalerweise aus Kunststoff oder Kunststoffolie und wird deshalb allgemein auch als Beutel bezeichnet. Zur Erhöhung seiner Stabilität und zur Vermeidung von Beschädigungen wird er normalerweise in einem Behälter aus Karton oder aus einem anderen Material vom Hersteller an den Kunden geliefert. Ein solcher Pulversack oder Pulverbeutel mit oder ohne Behälter wird üblicherweise als "Gebinde" bezeichnet. Der Kunde ist üblicherweise ein Beschichtungsbetrieb, welcher mit dem Beschichtungspulver Objekte beschichtet, indem das Pulver pneumatisch gefördert und auf das zu beschichtende Objekt gesprüht wird. Die Sprühvorrichtung wird üblicherweise auch als Spritzpistole oder Sprühpistole bezeichnet, wobei es manuell bedienbare und automatisch bedienbare Sprühvorrichtung oder Sprühpistolen gibt. Die automatischen Sprühvorrichtungen oder Sprühpistolen werden ferngesteuert und können ortsfest oder relativ zu einem zu beschichtenden Objekt bewegbar angeordnet sein, beispielsweise an einem Hubständer oder an einem Roboter.

Das Beschichtungspulver hat ein sehr leichtes spezifisches Gewicht, so daß es beim Umfüllen in einen anderen Behälter beim Kunden (Sprühbeschichtungsbetrieb) aus dem Gebinde oder aus dem aufzufüllenden Behälter herausschwebt und die Außenumgebung verschmutzt. Zur Vermeidung dieses Nachteiles und auch zur Vermeidung einer solchen Umfüllarbeit sind schon verschiedene Lösungsvorschläge bekannt geworden.

### Lösungsvorschlag 1:

Fördern von Beschichtungspulver aus dem Gebinde durch ein Tauchrohr, welches mit einem Injektor als pneumatische Pulverpumpe versehen ist. Um die im Gebinde (Plastikbeutel bis z. B. 25 kg in einem Karton) möglichst klein zu halten, ist es bekannt das Gebinde auf einer Plattform schräg zu stellen. Jedoch verbleibt selbst dann eine Restpulvermenge von ca. 1 kg bis 3 kg in einem 25 kg Gebinde. Eine solche Vorrichtung ist aus der EP 0 534 807 B1 (US 5 690 450) bekannt. Der Nachteil besteht darin, daß eine besondere Pulverfödervorrichtung mit einem Saugrohr und vorzugsweise auch eine Abdeckung des offenen Pulverbehältnisses erforderlich ist.

### Lösungsvorschlag 2:

Bei einem Gebinde in Form eines Fasses wird der Faßdeckel ausgetauscht gegen einen Spezialdeckel, durch welchen sich ein Tauchrohr mit einem Injektor als pneumatische Förderpumpe erstreckt. Solche Fässer werden üblicherweise für Pulvermengen von mehr als 25 kg verwendet, beispielsweise 600 kg. Ein solches Faß mit Spezialdeckel ist aus der EP 0 103 745 B1 (US 4 505 623) bekannt. Diese Lösung ist teuer und nur für große Pulvermengen geeignet.

### Lösungsvorschlag 3:

Verwendung eines Großgebindes in Form eines Sackes, ein sogenannter bigbag, für bis zu 1.000 kg. Der bigbag ist oben und unten geschlossen, hat am oberen Ende eine Verstärkung oder Aufhängeösen zum Aufhängen an einer Tragvorrichtung, und an seinem unteren Ende einen Aufreißverschluß mit einer Reißleine. An den Aufreißverschluß ist eine Pulverabgabevorrichtung anschließbar. Nach dem Anschließen einer Pulverabgabevorrichtung (Injektor oder Ventil, normalerweise ein sogenanntes Quetschventil) wird der Aufreißverschluß mittels der Reißleine geöffnet. Wenn die Pulverabgabevorrichtung abgenommen wird, fällt das Pulver aus dem bigbag frei heraus. Er kann nicht mehr verschlossen werden. Dies bedeutet, daß die Pulverabgabevorrichtung nur gegen eine andere ausgetauscht oder gereinigt werden kann, wenn der bigbag vollständig leer ist.

Bei verschiedenen Arten von Beschichtungspulver, z. B. aus Kunststoff, besteht die Gefahr, daß es sich bei Erschütterungen verdichtet und dann nicht mehr durch Schwerkraft oder pneumatische Saugwirkung aus dem Gebinde in die Pulverabgabevorrichtung förderbar ist. Um das Beschichtungspulver "fließfähig" zu halten, ist es bekannt, Druckluft als sogenannte Fluidisierluft in das Gebinde einzuleiten und damit die Pulverpartikel auf der Fluidisierluft "schweben" zu lassen. Fluidisierluft hat jedoch den Nachteil, daß es dazu neigt, das Beschichtungspulver zu entmischen, indem Feinpulverpartikel mit der Fluidisierluft im Gebinde hochsteigen und Grobpulverpartikel nach unten sinken und sich unten sammeln.

Wenn die Pulverabgabevorrichtung einen oder mehrere Injektoren als pneumatische Pumpen aufweist, wird in ihnen durch einen Förderluftstrom ein Unterdruck erzeugt, welcher Beschichtungspulver aus dem Gebinde ansaugt. Wenn das Gebinde über dem Injektor angeordnet ist, und das Beschichtungspulver im Gebinde durch Fluidisierluft fluidisiert wird, dann fällt auch bei abgeschaltetem Förderluftstrom Beschichtungspulver in den Injektor. Diese Pulvermenge ist größer als die vom Förderluftstrom kontinuierlich angesaugte Pulvermenge und wird deshalb beim Einschalten des Förderluftstromes als Pulverstoß (kompakter, dichter Pulverstrom) von einer Spritzvorrichtung auf das zu beschichtende Objekt oder daneben ausgestoßen.

Durch die Erfindung soll die Aufgabe gelöst werden, eine Möglichkeit zu schaffen, mit weicher nicht nur große Pulversäcke oder Pulverbeutel mit großer Pulvermenge, sondern auch kleine Pulversäcke oder Pulverbeutel mit kleiner Pulvermenge, beispielsweise kleiner als 25 kg , auf einfache und preiswerte Weise staubfrei Pulver durch eine Pulverabgabevorrichtung dosiert abgeben können.

Diese Aufgabe wird gemäß der Erfindung durch die Merkmale von Anspruch 1 gelöst.

Die Erfindung hat den Vorteil, daß keine Spezialbehälter und keine Spezialdeckel und auch keine Tauchrohre zum Eintauchen in den Pulverbehälter bzw. Pulversack erforderlich sind; daß kein Umfüllen des Beschichtungspulvers aus dem Pulversack in einen anderen Pulverbehälter erforderlich ist für das Sprühbeschichten von Gegenständen mit dem Beschichtungspulver; daß kein Pulverstaub aus dem Pulversack in die Außenumgebung dringen kann; daß die Pulverabgabevorrichtung jederzeit auch bei teilentleertem Pulversack von diesem entfernt und gereinigt oder gegen einen anderen ausgetauscht werden kann, ohne daß das Beschichtungspulver aus dem Pulversack herausfällt; daß die dosierte Pulverabgabe nicht nur mit Fluidisierluft, sondern auch ohne Fluidisierluft möglich ist und damit Pulverstöße (kompakter Pulverballen) beim Einschalten der Pulverförderung des Injektors vermieden werden (mit Ausnahme vielleicht beim ersten Einschalten der Förderluft des Injektors nach dem Umdrehen des Pulversackes von der aufrechten Stellung in die Kopfüber-Stellung); daß Pulversack und Pulver einfacher handhabbar sind.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen
- Fig. 1: eine Seitenansicht einer Vorrichtung nach der Erfindung in aufrechter Stellung, wobei ein Trichter einen Höhenabstand über einer Stellfläche hat, bei welcher ein Gebinde auf der Stellfläche unter dem Trichter stellbar ist oder der Trichter über das Gebinde schwenkbar ist,
- Fig. 2: die Seitenansicht von Fig. 1, wobei der Trichter auf das Gebinde abgesenkt wurde,
- Fig. 3: die Seitenansicht der Vorrichtung nach den Fig. 1 und 2, nachdem auf den Trichter ein Aufsatz aufgesetzt und befestigt wurde, wobei die Vorrichtung und das Gebinde in den Fig. 1, 2 und 3 in einer aufrechten Stellung gezeigt sind,
- Fig. 4: eine Seitenansicht der Vorrichtung der Fig. 1 bis 3, nachdem eine Wendeeinheit der Vorrichtung zusammen mit dem Gebinde um eine horizontale (oder schräge) Achse von der aufrechten Stellung in eine Kopfüber-Stellung umgedreht wurde,
- Fig. 5: die Vorrichtung von Fig. 4, jedoch mit einer anderen Pulverabgabevorrichtung,
- Fig. 6: die Vorrichtung von Fig. 4, jedoch mit einer nochmals anderen Pulverabgabevorrichtung,
- Fig. 7: die Vorrichtung von Fig. 4 in ihrer Kopfüber-Stellung und weitere Teile einer Pulverspritzbeschichtungsanlage, mit welcher die Vorrichtung nach der Erfindung kombinierbar ist,
- Fig. 8: eine schematische Seitenansicht, teilweise im Vertikalschnitt, einer Pulverspritzbeschichtungsanlage mit zwei verschiedenen Vorrichtungen nach der Erfindung zur Abgabe von Beschichtungspulver aus einem Gebinde,
- Fig. 9: eine weitere Vorrichtung nach der Erfindung in aufrechter Stellung im Vertikalschnitt gezeigt,
- Fig. 10: die Vorrichtung von Fig. 9 in Kopfüber-Stellung gedreht,
- Fig. 11: ein Horizontalquerschnitt in Richtung der Pfeile XI-XI von Fig. 9 gesehen,
- Fig. 12: eine weitere Vorrichtung nach der Erfindung ähnlich Fig. 9 in Vertikalschnitt gezeigt.

Für die hier folgende Beschreibung der Erfindung bedeutet "Gebinde" die Kombination aus einem Behälter, z. B. einem Karton, und einem im Behälter angeordneten Pulversack. Die Erfindung ist jedoch auch für Pulversäcke ohne Behälter verwendbar. Der Ausdruck "Pulversack" bedeutet im Rahmen der Erfindung ein sackähnliches oder beutelähnliches Gebilde aus einem folienartigen oder tuchartigen weichen Material, so daß der Pulversack mindestens in seinem die Sacköffnung bildenden Sackendabschnitt manuell leicht nach außen umbiegbar oder umlegbar ist. Üblicherweise besteht der Pulversack aus Plastik und wird deshalb häufig auch als Pulverbeutel bezeichnet. In den Patentansprüchen und der Beschreibung bedeuten "Pulversack oder ein den Pulversack enthaltender Behälter" nicht, daß die Vorrichtung für beide Möglichkeiten ausgebildet sein muß, sondern daß sie nur für die eine oder nur für die andere oder für beide Möglichkeiten ausgebildet sein kann.

Die hier beigefügten Zeichnungen zeigen jeweils einen Pulversack 2 (was auch ein Beutel oder dergleichen sein kann), z. B. aus Kunststoff, in einem Behälter 4, beispielsweise aus Karton. Beide zusammen bilden das sogenannte Gebinde, in welchem Pulverhersteller Beschichtungspulver an Firmen liefern, welche das Beschichtungspulver mittels einer Spritzbeschichtungsvorrichtung oder Sprühvorrichtung, meistens Pulverpistole genannt, auf ein zu beschichtendes Objekt sprühen.

Die Vorrichtung 1 der Erfindung zum dosierten Entnehmen von Beschichtungspulver aus einem Pulversack 2 enthält eine Umdreheinheit 6, die eine Stellfläche 8 für den Pulversack 2 und eine Haltevorrichtung 10 für einen Trichter 12 aufweist.

Der Trichter 12 ist auf den die Sacköffnung 16 bildenden Sackendabschnitt 18 des auf der Stellfläche 8 stehenden Pulversackes oder auf den Öffnungsrand 20 des den Pulversack 2 enthaltenden Behälters 4 umgekehrt aufsetzbar und im aufgesetzten Zustand mittels der Haltevorrichtung 10 an der Umdreheinheit 6 befestigt oder befestigbar. Mit dem Begriff "Trichter" ist ein Deckel gemeint, welcher eine trichterförmige Innenfläche mit einem größten Querschnitt an einem Trichterende und einem kleinsten Querschnitt am anderen Trichterende hat.

Gemäß einer Ausführungsform kann der Trichter 12 auf den Pulversack 2 bzw. den geöffneten Behälter 4 manuell aufgesetzt werden und dann an der Umdreheinheit 6 befestigt werden. Gemäß den bevorzugten Ausführungsformen der Erfindung ist der Trichter 12 an einer Hubvorrichtung 14 der Haltevorrichtung 10 befestigt und von dieser relativ zur Stellfläche 8 auf- und abbewegbar, entweder manuell oder elektrisch oder vorzugsweise pneumatisch oder hydraulisch. Zum leichteren Positionieren des Gebindes 2, 4 unter dem Trichter 12 kann gemäß einer bevorzugten Ausführungsform der Trichter 12 relativ zur Umdreheinheit 6 um eine rechtwinklig zur Stellfläche 8 sich erstreckende Schwenkachse 22 schwenkbar angeordnet sein, beispielsweise der Trichter 12 schwenkbar zur Hubvorrichtung 14 oder die Hubvorrichtung 14 schwenkbar relativ zur Umdreheinheit 6. Dadurch kann der Trichter 12 zur Seite geschwenkt, dann das Gebinde 2, 4 auf die Stellfläche 8 gestellt, und dann der Trichter 12 über das Gebinde 2, 4 zurückgeschwenkt werden.

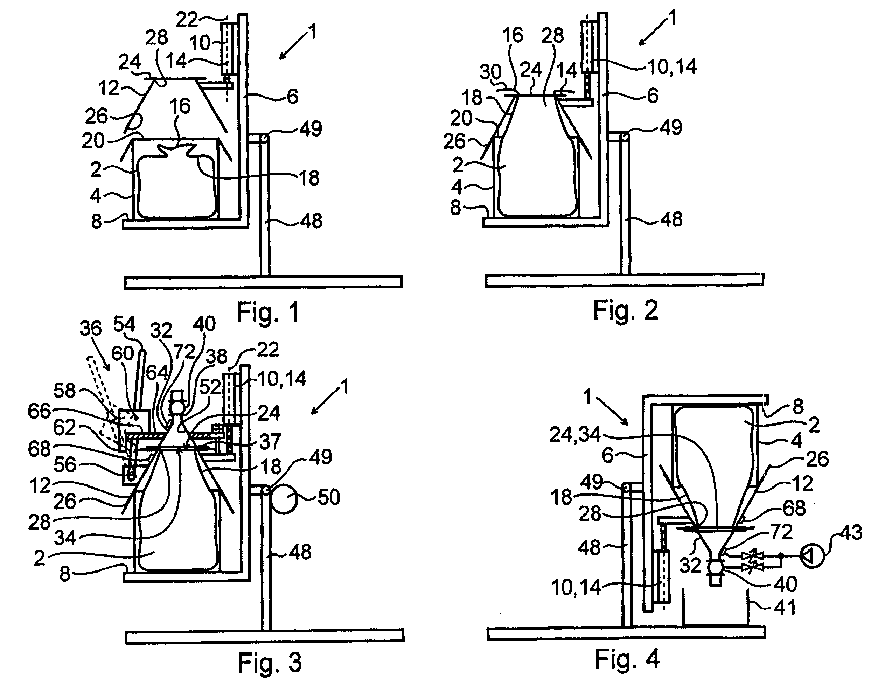

Der Trichter 12 hat in Richtung nach unten zur Stellfläche 8 hin einen trichterförmig zunehmend größeren Öffnungsquerschnitt und ist am engeren oberen Ende mit einer rahmenartigen, z. B. ringförmigen, ersten Flanschfläche 24 versehen, welche sich von der Trichteröffnung relativ zur Mittelachse radial oder schräg nach außen erstreckt, die Trichteröffnung rahmenförmig oder ringförmig umgibt und in die gleiche Richtung wie die Stellfläche 8 zeigt, d. h. in den Fig. 1, 2 und 3 nach oben und in Fig. 4 nach unten.

Der Öffnungsquerschnitt des weiteren unteren Endes 26 ist mindestens so groß oder größer wie der Öffnungsquerschnitt des Pulversackes 2. Der Öffnungsquerschnitt des engeren oberen Trichterendes 28 und dessen erste Flanschfläche 24 ist kleiner als der Öffnungsquerschnitt des Pulversackes 2.

Der Trichter 12 wird in Fig. 1 von der Hubvorrichtung 14 in einem Höhenabstand von der Stellfläche 8 entfernt gehalten, bei welcher das untere Trichterende 26 auch einen Höhenabstand von dem Behälterrand 20 und dem oberen Ende des Pulversackes 2 hat. Dadurch kann das Gebinde 2, 4 unter dem Trichter 12 positioniert werden. Der Trichter 12 ist mittels der Hubvorrichtung 14 von der in Fig. 1 gezeigten Ausgangsstellung in die in Fig. 2 gezeigte Anschlußstellung absenkbar und in dieser abgesenkten Anschlußstellung an der Umdreheinheit 6 fixierbar (verriegelbar), so daß er relativ zur Umdreheinheit 6 nicht mehr beweglich ist. In dieser Anschlußstellung von Fig. 2 kann der die Sacköffnung 16 aufweisende Sackendabschnitt 18 manuell (oder automatisch) durch den Trichter 12 hindurch nach oben aus dem Trichter herausgezogen und nach außen über die erste Flanschfläche 24 umgelegt werden, so daß ein Teil 30 des Sackendabschnittes 18 auf der ersten Flanschfläche 24 liegt, wie dies Fig. 2 zeigt.

Gemäß einer nicht gezeigten anderen Ausführungsform ist keine Hubvorrichtung 14 vorhanden und der Trichter 12 ist in Fig. 1 manuell auf das Gebinde 2, 4 aufsetzbar und danach in der in Fig. 2 gezeigten Anschlußstellung durch die Haltevorrichtung 10 an der Umdreheinheit 6 befestigbar, so daß der Trichter 12 relativ zur Umdreheinheit 6 nicht mehr bewegbar ist.

Ferner ist gemäß der Erfindung, wie in Fig. 3 gezeigt ist, ein Aufsatz 32 vorgesehen, welcher das engere obere Trichterende 28 abschließend ausgebildet ist und eine zweite Flanschfläche 34 hat, welche auf die erste Flanschfläche 24 aufsetzbar ist zum Einklemmen des gemäß Fig. 2 umgelegten Teils 30 des Sackendabschnittes 18 zwischen den beiden Flanschflächen 24 und 34. Die beiden Flanschflächen 24 und 34 haben eine der Querschnittsform des oberen Trichterendes 28 entsprechende bogenförmige oder mehreckige rahmenartige oder ringförmige Form. Zur Befestigung des Aufsatzes 32 auf dem Trichter 12 und gleichzeitig zum Einspannen des nach außen umgelegten oder umgestülpten Teiles 30 des Sackendabschnittes 18 zwischen die beiden Flanschflächen 24 und 34 können Spannmittel wie beispielsweise Schrauben verwendet werden, welche durch die Flanschflächen 24 und 34 hindurchgeführt sind oder an anderen Teilen des Trichters 12 und des Aufsatzes 32 angreifen. Vorzugsweise ist eine Schnellspannvorrichtung 36 vorgesehen. Diese kann an einem der beiden Teile Trichter 12 oder Aufsatz 32 schwenkbar befestigte Schrauben und zugehörige Flügelmuttern aufweisen oder andere Mittel oder vorzugsweise eine Spannhebelanordnung aufweisen, wie sie nachfolgend noch im Detail beschrieben wird.

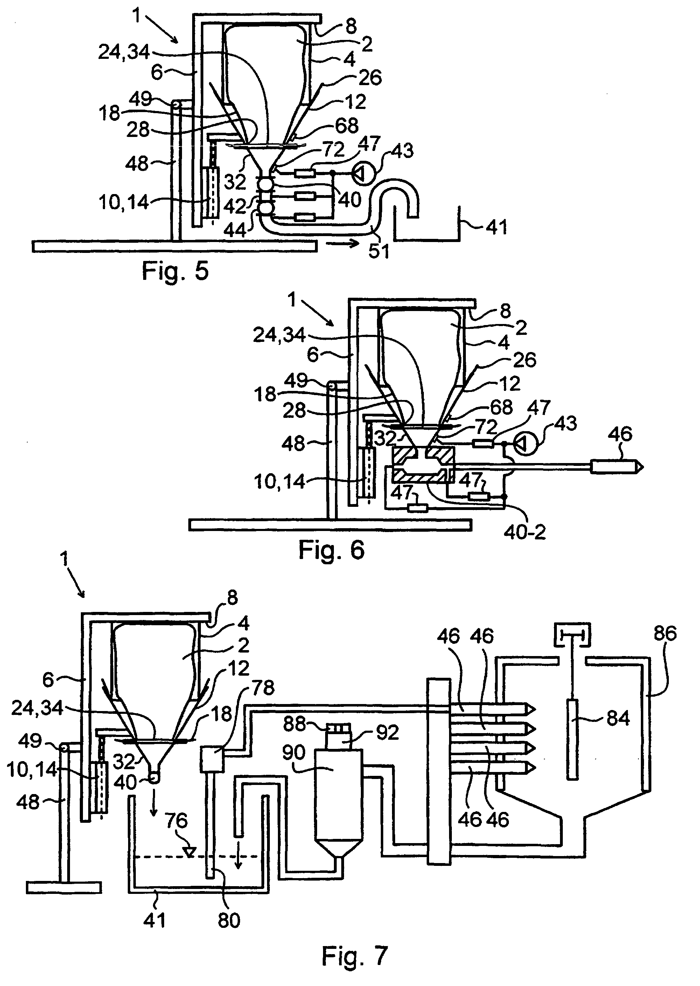

Der Aufsatz 32 hat ein mit Bezug auf Fig. 3 unteres Ende 37, an welchem sich seine zweite Flanschfläche 34 befindet, und ein oberes Ende 38, an welchem der Aufsatz 32 mit einer Pulverabgabevorrichtung 40 versehen ist, welche vorzugsweise in der Querschnittsmitte angeordnet ist. Die Pulverabgabevorrichtung 40 kann, wie in den Fig. 1 bis 4 gezeigt, ein Ventil sein, durch welches Pulver aus dem Pulversack, wenn er in einer Kopfüber-Stellung von Fig. 4 ist, durch Schwerkraft hindurchströmen kann, z. B. in einen Pulverbehälter 41, oder eine Ventilschleuse gemäß Fig. 5 sein, welche zusätzlich zu dem Ventil 40 axial zum Trichter 12 eine Schleusenkammer 42 und ein zweites Ventil 44 aufweist.

Dadurch kann gemäß Fig. 5 bei geöffnetem ersten Ventil 40 und geschlossenem zweiten Ventil 44 Beschichtungspulver durch Schwerkraft in die Schleusenkammer 42 strömen, welche eine ihrer Größen entsprechend dosierte Pulvermenge aufnehmen kann und z. B. durch ein Rohrstück gebildet ist. Danach kann durch Schließen des ersten Ventils 40 und durch Öffnen des zweiten Ventils 44 das Beschichtungspulver durch Schwerkraft in einen darunter stehenden Behälter 41 (Fig. 4) fallen oder zu einem von der Vorrichtung 1 distanzierten Pulverbehälter 41 (Fig. 5) pneumatisch gefördert werden. Die Ventile 40 und 44 sind vorzugsweise sogenannte Quetschventile, deren Innenwand durch einen flexiblen Schlauch gebildet ist, welcher durch pneumatischen Druck auf seinen Außenumfang in einen Schließzustand zusammenpreßbar ist. Zur pneumatischen Förderung des Beschichtungspulvers kann von einer Druckluftquelle 43 über Steuerventile und/oder über Druckregler 47 Druckluft als Förderluft in die Schleusenkammer 42 und, falls zweckmäßig, auch als Zusatzluft in den Pulverweg 51 nach der Schleusenkammer 42 eingeleitet werden.

Gemäß einer nochmals weiteren Ausführungsform, welche in Fig. 6 gezeigt ist, kann die Pulverabgabevorrichtung 40, dort mit 40-2 bezeichnet, ein Injektor zur pneumatischen Förderung des Beschichtungspulvers aus dem Pulversack 2 zu einem Pulverbehälter 41 oder zu einer manuellen oder automatische Sprühvorrichtung 46 sein.

Wie die Zeichnungen zeigen, ist die Umdreheinheit 6 durch eine Lagervorrichtung 49 in einem Ständer 48 oder an einer Wand oder an einem anderen Maschinenteil drehbar gelagert, vorzugsweise um eine horizontale Achse, und zusammen mit dem Gebinde 2, 4, welches zwischen dem Trichter 12 und der Stellfläche 8 eingespannt oder lose gefangen ist, von der aufrechten Stellung, welche in den Fig. 1, 2 und 3 gezeigt ist, in eine Kopfüber-Stellung drehbar, welche in den Fig. 4 bis 8 gezeigt ist. Durch dieses Drehen von der aufrechten Stellung in die Kopfüber-Stellung kommt der Pulversack 2 im Trichter 12 kopfüber zum Stehen und die Pulverabgabevorrichtung 40 oder 40, 42, 44 oder 40-2 liegt unter der Sacköffnung 16, die durch Einklemmen des Sackendabschnittes 18 zwischen den beiden Klemmflächen 24 und 34 offen gehalten wird. Die gleiche Situation ergibt sich, wenn der Pulversack 2 ohne einen Behälter 4 verwendet wird. Das Drehen der Umdreheinheit 6 relativ zu dem Ständer 48 kann manuell oder, falls ein Motor 50 vorgesehen ist, welcher in Fig. 3 schematisch dargestellt ist, durch Motorantrieb erfolgen. Der Trichter 12 hält den Pulversack 2 und seinen Behälter 4 nicht nur in Sacklängsrichtung (horizontaler Richtung), sondern auch quer zur Sacklängsrichtung.

Gemäß bevorzugter Form der Erfindung weist der Aufsatz 32 eine trichterförmige Trichterverlängerung 52 auf, deren Trichterform von einem größten Querschnitt bis zu einem kleinsten Querschnitt sich fortlaufend verengt und eine Fortsetzung des Trichters 12 bildet, wenn der Aufsatz 32 entsprechend den Fig. 3 bis 8 auf den Trichter 12 gespannt ist, wobei der größte Querschnitt der Trichterverlängerung 52 vorzugsweise dem kleinsten Querschnitt des Trichters 12 angepaßt (gleich groß und gleiche Form) ist und diesem benachbart ist und wobei der kleinste Querschnitt der Trichterverlängerung 52 nahe bei oder vorzugsweise an der Pulverabgabevorrichtung 40 bzw. 40, 42, 44 bzw. 40-2 liegt.

Vorzugsweise ist der Trichter 12 und/oder die Trichterverlängerung 52 stufenlos trichterförmig schräg ausgebildet. Der Neigungswinkel des Trichters 12 und der Trichterverlängerung 52 (trichterförmige Innenfläche) beträgt vorzugsweise 45° oder mehr, und ist jedenfalls so steil, daß das Beschichtungspulver durch Schwerkraft aus dem Pulversack 2 auf die Pulverabgabevorrichtung 40 bzw. 40, 42, 44 bzw. 40-2 strömen kann, wenn sich der Pulversack in seiner Kopfüber-Stellung entsprechend den Fig. 4 bis 8 befindet.

Eine bevorzugte Ausführungsform der Schnellspannvorrichtung ist eine Spannhebelanordnung, wie sie beispielsweise in Fig. 3 gezeigt ist. Fig. 3 zeigt einen Spannhebel 54, welcher durch eine quer zur Trichterlängsachse sich erstreckende Drehachse 56 an dem Trichter 12 drehbar befestigt ist und von einer entriegelten Stellung in die in ausgezogenen Linien gezeigte verriegelte Stellung schwenkbar ist. Am Spannhebel 54 ist ein Klemmkörper 58 um eine weitere Schwenkachse 60 schwenkbar befestigt, welche parallel zur einen Schwenkachse 56 ist. Der Klemmkörper 58 hat vorzugsweise eine Nase 62, welche beim Schwenken von der entriegelten Stellung in die verriegelte Stellung ein an dem Aufsatz 32 befestigtes Klemmstück 64 untergreift und dadurch den Klemmkörper 58 auf dieses Klemmstück 64 dreht, so daß eine Klemmfläche 66 des Klemmkörpers 58 auf das Klemmstück 64 gespannt wird und damit der Aufsatz 32 auf den Trichter 12 gespannt wird. Der Spannhebel 54 und der Klemmkörper 58 sind in Fig. 3 in ausgezogenen Linien in der Spann- und Verriegelungsstellung gezeigt und außerdem in gestrichelten Linien in einer Zwischenstellung zwischen dieser Spann- und Verriegelungsstellung und einer entriegelten Stellung.

Wie Fig. 4 zeigt, kann an dem Trichter 12 ein Vibrator 68 angebracht sein, welcher den Trichter 12 vibriert, um das Beschichtungspulver fließfähig zu halten, damit es durch Schwerkraft aus dem Pulversack 2 in seiner Kopfüber-Stellung auch dann fließen kann, wenn der Trichterneigungswinkel allein nicht ausreichen würde, um das Beschichtungspulver durch Schwerkraft aus dem Pulversack herausfließen zu lassen.

Vorzugsweise ist der Aufsatz 32 (oder der Trichter 12) mit einem Luftanschluß 72 zur Zufuhr von Ausgleichsluft in den Pulversack 2 versehen, um im Pulversack 2 durch entnommenes Beschichtungspulver entstehenden Unterdruck mindestens teilweise ausgleichen zu können. Dieser Luftanschluß 72 ist vorzugsweise an dem Ende des Aufsatzes 32 vorgesehen, welcher sich in der Kopfüber-Stellung gemäß Fig. 4 bis 8 unten befindet. In diesem Falle kann diese Druckluft durch das Pulver hindurch aufsteigen und dadurch dieses gleichzeitig etwas auflockern. Die Druckluft kann entweder kontinuierlich in Abhängigkeit von dem im Pulversack 2 entstehenden Unterdruck zugeführt werden, oder in zeitlichen Abständen, unabhängig vom Unterdruck. Hierbei handelt es sich jedoch nicht um sogenannte Fluidisierluft zur Fluidisierung des Beschichtungspulvers in dem Aufsatz 32 oder in dem Pulversack 2, sondern die Luft wird nur mit so kleiner Menge pro Zeiteinheit zugeführt, daß keine Fluidisierung des Pulvers stattfindet und damit auch keine Pulverentmischung entsteht. Bei Fluidisierung des Beschichtungspulvers würde die Gefahr bestehen, daß es entmischt wird, indem feinere Pulverpartikel von der aufsteigenden Fluidisierluft nach oben getragen werden, während größere und schwerere Pulverpartikel nach unten wandern. Eine Fluidisierung des Beschichtungspulvers durch Fluidisierluft, welche durch den Aufsatz 32 hindurch in den Pulversack 2 eingebracht wird, ist selbstverständlich auch bei der Erfindung möglich. Die bevorzugte Ausführungsform ist jedoch, keine Fluidisierung vorzunehmen, sondern nur einen oder mehrere Druckluftanschlüsse 72 zu verwenden, durch welche Druckluft mit so geringer Menge pro Zeiteinheit zugeführt wird, daß keine Fluidisierung des Beschichtungspulvers und damit auch keine Pulverentmischung erfolgt.

Zum Austausch des Pulversackes 2 gegen einen anderen Pulversack 2 (oder ein Gebinde 2, 4 gegen ein anderes Gebinde 2, 4) wird die Umdreheinheit zusammen mit dem Gebinde 2, 4 von der in Fig. 4 gezeigten Stellung in die in Fig. 3 gezeigte Stellung zurückgedreht (oder in gleicher Drehrichtung) um 180° weiter gedreht und dadurch von der Kopfüber-Stellung der Fig. 4 bis 8 in die aufrechte Stellung von Fig. 3 gebracht. In Fig. 3 wird dann die Spannvorrichtung 36 geöffnet. Anschließend wird der Aufsatz 32 von dem Trichter 12 abgehoben (maschinell oder manuell). Danach wird der Trichter 12 (manuell oder vorzugsweise durch die Hubvorrichtung 14 der Haltevorrichtung 10) nach oben vom Pulversack weg bewegt, wobei der um die erste Flanschfläche 24 nach außen umgelegte Teil 30 des Sackendabschnittes 18 über den oberen Trichterrand nach innen abgestreift wird. Dadurch fällt auf der Innenseite des Pulversackendabschnittes 18 haftendes Beschichtungspulver in den Pulversack 2 zurück, ohne daß Beschichtungspulver in die Außenumgebung entweichen und diese verschmutzen kann.

Fig. 7 zeigt schematisch eine besondere Verwendung der Vorrichtung 1 nach der Erfindung. Fig. 7 zeigt die Vorrichtung 1 entsprechend Fig. 4 in ihrer Kopfüber-Stellung, in welcher sich der Pulversack 2 und die Pulverabgabevorrichtung 40 über einem Pulverbehälter 41 befinden, um in diesen dosierte Mengen von Beschichtungspulver durch Schwerkraft abzugeben. Damit kann in dem Pulverbehälter 41 innerhalb eines vorbestimmten Toleranzbereiches ein vorbestimmtes Pulverniveau 76 aufrecht erhalten werden. Mindestens ein Injektor 78 saugt über ein Tauchrohr 80 Beschichtungspulver aus dem Pulverbehälter 41 und fördert dieses pneumatische zu einer Sprühvorrichtung 46. Als Beispiel sind vier Sprühvorrichtungen 46 dargestellt, welche jeweils von einem anderen Injektor 78 mit Beschichtungspulver aus dem Pulverbehälter 41 versorgt werden. Sie sprühen das Beschichtungspulver auf ein zu beschichtendes Objekt 84 in einer Beschichtungskabine 86. Überschüssiges Beschichtungspulver wird aus der Beschichtungskabine 86 von einem Sauggebläse 88 durch einen Zyklonabscheider 90 gesaugt. Im Zyklon 90 abgeschiedenes Pulver wird von dessen unterem Ende in den Pulverbehälter 46 zurück geführt, während Luft und Pulver-Feinstaub aus dem oberen Zyklonende durch einen Feinfilter 92 gelangen, welcher den Pulver-Feinstaub abscheidet und die Restluft in die Außenumgebung abgibt.

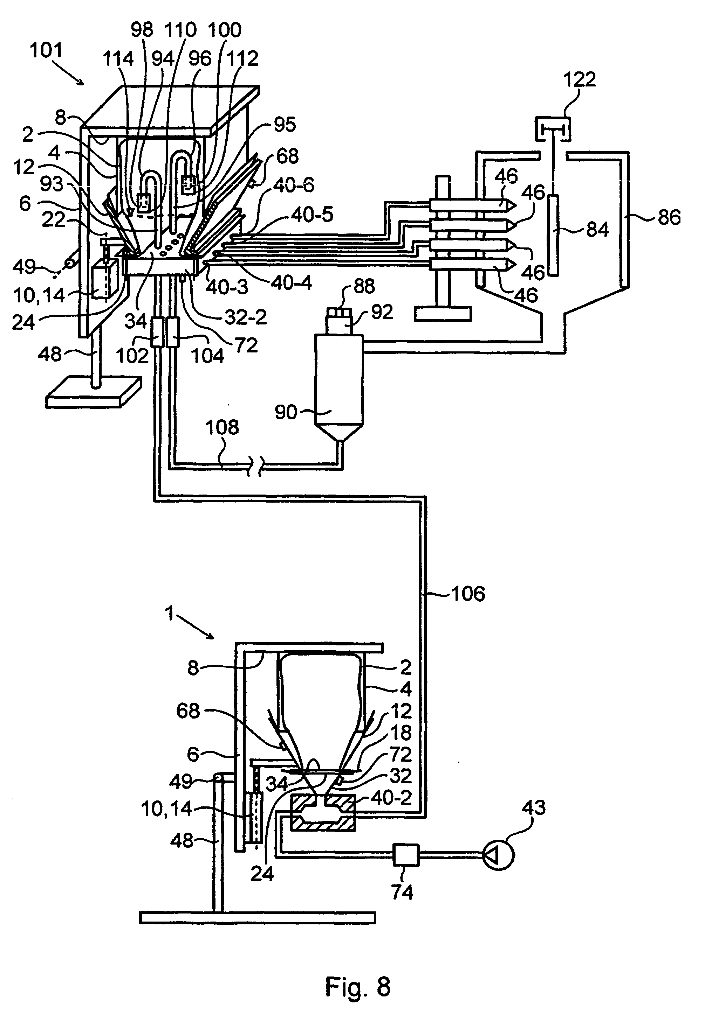

Fig. 8 zeigt eine weitere Verwendung der Erfindung. Unten ist eine Vorrichtung 1 nach der Erfindung entsprechend Fig. 6 in der Kopfüber-Stellung gezeigt. Der Injektor 40-2 saugt aus dem Pulversack 2 Beschichtungspulver und fördert es pneumatisch zu einer in Fig. 8 oben gezeigten weiteren Vorrichtung 101, welche gemäß einer weiteren Ausführungsform der Erfindung ausgebildet ist.

Wenn über den Öffnungsquerschnitt der Sacköffnung 16 verteilt nicht nur eine Pulverabgabevorrichtung, sondern zwei oder mehr Abgabevorrichtungen angeordnet sind, durch welche der Pulversack 2 so weit geöffnet werden kann, daß der Trichterwinkel des Trichters 12 ohne Trichterverlängerung ausreichend steil ist, beispielsweise mehr als 45°, um das Beschichtungspulver durch Schwerkraft und gegebenenfalls mit Hilfe eines Vibrators 68 von den schrägen Wänden des Pulversackes 2 auf die Pulverabgabevorrichtung rutschen zu lassen, dann braucht der Aufsatz 32 keine Trichterform oder Trichterverlängerung 52 aufzuweisen. In diesem Falle kann der Aufsatz durch einen block- oder plattenförmigen Aufsatz 32-2 gebildet sein, welcher die zweite Flanschfläche 34 aufweist und an welcher die Abgabevorrichtung befestigt oder befestigbar ist oder welcher die Abgabevorrichtung 40 bzw. 40, 42, 44 bzw. 40-2 bildet oder enthält. Eine solche Ausführungsform der Erfindung ist in Fig. 8 oben links in der Kopfüber-Stellung dargestellt entsprechend Fig. 4.

Bei dieser in Fig. 8 oben links gezeigten Vorrichtung 101 ist der Aufsatz mit 32-2 bezeichnet und mit mindestens einem, vorzugsweise zwei Pulverzufuhrrohren 93 und 95 versehen, welche sich von dem Aufsatz 32-2 in Richtung zum Trichter 12 und durch den Trichter 12 in den Pulversack 2 erstrecken. Die vom Aufsatz 32-2 entfernten Endabschnitte 94, 96 sind in Richtung zu dem Aufsatz 32-2 zurückzeigend zurückgebogen. Dies hat zwei Vorteile: Der eine besteht darin, daß in der aufrechten Stellung der Umdreheinheit 6 und des Pulversackes 2 (entsprechend den Fig. 1, 2, und 3) beim Aufsetzen des Aufsatzes 32-2 auf den Trichter 12, die Endabschnitte 94, 96 der Pulverzufuhrrohre 93, 95 in das Beschichtungspulver im Pulversack 2 steckbar sind, ohne daß Beschichtungspulver in die offenen Rohrenden 98, 100 eingedrückt wird. Der andere Vorteil besteht darin, daß in der Kopfüber-Stellung der Umdreheinheit 6 und des Pulversackes 2 von Fig. 2 kein Pulver aus dem Pulversack 2 in die offenen Rohrenden 98, 100 fallen kann. Die Pulverzufuhrrohre 93, 95 sind an dem Aufsatz 32-2 befestigt. Sie können sich durch den Aufsatz 32-2 hindurch erstrecken und auf dessen Außenseite Anschlußmittel 102 bzw. 104 aufweisen. Gemäß anderer Ausführungform können die Anschlußmittel 102, 104 an dem Aufsatz 32-2 vorgesehen sein und der Aufsatz kann Kanäle zu den Rohren 93 bzw. 95 aufweisen. An das eine Pulverzufuhrrohr 93 ist mittels des einen Anschlußmittels 102 über einen Pulverschlauch 106 der Ausgang des Injektors 40-2 der in Fig. 8 unten gezeigten Vorrichtung 1 angeschlossen.

Das andere Pulverzufuhrrohr 95 ist mittels dessen Anschlußmittel 104 an einen Pulverrückgewinnungsschlauch 108 einer Pulverrückgewinnungseinrichtung angeschlossen, beispielsweise einen Zyklon 90 mit Abluftventilator 88 und Feinfilter 92. Der Abluftventilator 88 saugt aus einer Pulverkabine 86 überschüssiges Beschichtungspulver ab, welches an einem zu beschichtenden Objekt 84 abprallt oder an diesem vorbeigesprüht wurde.

Der Aufsatz 32-2 der in Fig. 8 oben gezeigten Vorrichtung 101 enthält oder bildet als Beispiel zwei oder mehr, beispielsweise vier oder acht oder zwölf oder eine andere Anzahl von Injektoren 40-3, 40-4, 40-5 und 40-6. Die dem Pulversack 2 zugewandte Oberfläche des Aufsatzes 32-2 kann flach oder trichterförmig sein.

In Fig. 8 sind den Fig. 1 bis 6 entsprechende Teile mit gleichen Bezugszahlen versehen.

Die obere Vorrichtung 101 von Fig. 8 zeigt auch, daß nicht nur im Querschnitt kreisrunde Gebinde 2, 4 oder Pulversäcke 2, sondern auch viereckige oder andere eckige Querschnittsformen verwendbar sind. Beispielsweise hat die in Fig. 8 oben gezeigte Vorrichtung 101 einen im Querschnitt rechteckigen Behälter 4, so daß auch der Pulversack 2 einen rechteckigen Querschnitt hat. Auch ohne einen mehreckigen Behälter 4 könnte der Pulversack 2 selbst mehreckig gebildet sein.

Die Injektoren 40-3, 40-4, 40-5 und 40-6 fördern Beschichtungspulver aus dem Pulversack 2 über Pulverschläuche zu manuellen oder vorzugsweise automatischen Spritzvorrichtungen oder Sprühvorrichtungen 46. Diese sind durch Schlitze in der Kabine 86 auf das zu beschichtende Objekt 84 gerichtet, welches durch einen Förderer 122 automatisch gesteuert durch die Kabine 86 transportiert wird.

Gemäß einer anderen, nicht gezeigten Ausführungsform, kann auch bei der Vorrichtung 101 der Aufsatz 32-2 eine trichterförmige Trichterverlängerung 52 aufweisen oder bilden, wie dies mit Bezug auf die Fig. 1 bis 4 beschrieben wurde, wenn diese wegen der Größe des Pulversackes 2, insbesondere wegen der Größe seines Querschnittes und der Pulverfüllmenge in ihm, erforderlich oder zweckmäßig ist.

Gemäß einer besonderen Ausführungsform der Erfindung sind bei der in Fig. 8 oben gezeigten Vorrichtung 101 sehr weich-flexible Schlauchstücke 110 bzw. 112 auf die zurückgebogenen Endabschnitte 94 bzw. 96 der Pulverzufuhrrohre 93 und 95 aufgesteckt. Die Schlauchstücke 94 und 96 haben einen über das offene Rohrende 98 bzw. 100 überstehenden Schlauchabschnitt und sind so weich-flexibel, daß der überstehende Schlauchabschnitt durch von außen darauf drückendes Beschichtungspulver zusammendrückbar und damit automatisch verschließbar ist, jedoch durch einen Pulverstrom wieder aufdrückbar ist, wenn ein solcher Pulverstrom durch das Pulverzufuhrrohr 93 bzw. 95 in den Pulversack 2 gefördert wird. Die weich-flexiblen Schlauchstücke 94 und 96 haben damit die Wirkung von Rückschlagventilen, welche ein Eindringen von Beschichtungspulver in die Pulverzufuhrrohre 93 und 95 verhindern. Das Pulverniveau liegt z. B. bei der Bezugszahl 114.

Der Trichter 12 kann durch einen Flansch ersetzt werden, welcher die erste Trichterfläche 24, jedoch auf seinem Innenumfang keine Trichterform aufweist, wenn die Öffnungsquerschnitte der Trichterverlängerung 52 ausreichend groß sind, damit das Beschichtungspulver durch Schwerkraft aus dem Pulversack 2 in den Pulverweg des Aufsatzes 32 bzw. 32-2 und dessen Pulverabgabevorrichtung fallen kann in der Kopfüber-Stellung.

Zusätzlich zum Ersatz des Trichters 12 durch einen Flansch kann auch die Trichterverlängerung 52 des Aufsatzes 32 bzw. 32-2 entfallen, wenn der Öffnungsquerschnitt der Pulveraufnahmeöffnung oder der Pulveraufnahmeöffnungen insgesamt des Aufsatzes 32 bzw. 32-2 sich im wesentlichen über den gesamten Öffnungsquerschnitt des Pulversackes 2 erstreckt bzw. erstrecken.

In den Fig. 1 bis 8 bilden der Trichter 12 oder ein ihn ersetzender Flansch einerseits und der Aufsatz 32 bzw. 32-2 andererseits zusammen eine Sackabdeckvorrichtung.

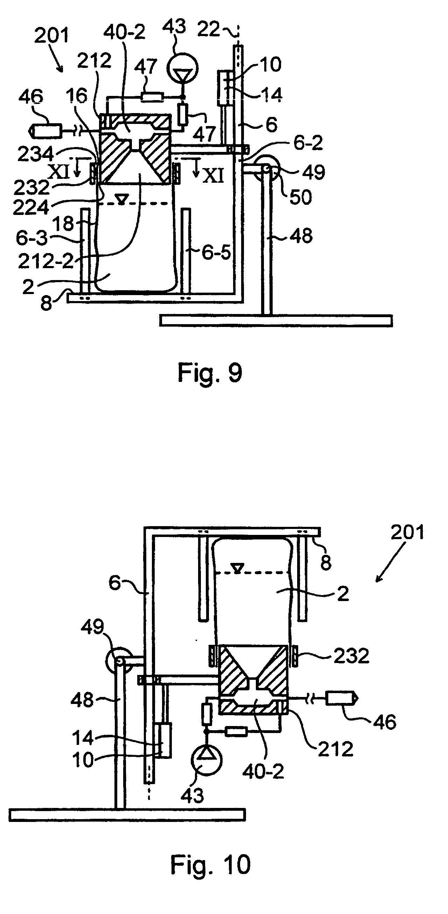

In den Fig. 9, 10 und 11 ist eine weitere Ausführungsform einer Vorrichtung 201 nach der Erfindung zum dosierten Abgeben von Beschichtungspulver zu einem Pulversack 2 gezeigt, welche eine andere Sackabdeckvorrichtung aufweist. Diese Sackabdeckvorrichtung enthält einen Aufsatz 212, welcher in die Sacköffnung 16 des Pulversackes 2 einsetzbar ist, und einen den Sackendabschnitt 18 nahe der Sacköffnung 16 außen umgebenden Spannring 232. Der Aufsatz 212 hat an seinem Außenumfang eine radial nach außen zeigende erste Flanschfläche 224, die einer radial nach innen zeigenden Flanschfläche 234 des Spannringes 232 radial gegenüber liegt. Der Sackendabschnitt 18 erstreckt sich zwischen die beiden Spannflächen 224 und 234 und ist durch radiales Zusammenziehen des Spannringes 232 zwischen sie einspannbar, um den Pulversack 2 offen zu halten und um ihn an seinem oberen Ende mit der Umdreheinheit 6 zu verbinden und an dieser zu fixieren.

Der Aufsatz 212 ist mit mindestens einem oder mehreren Injektoren 40-2 versehen, welche beispielsweise in dem Aufsatz 212 gebildet oder an diesem befestigt oder befestigbar sein können. Anstelle eines Injektors kann der Aufsatz 212 auch mit einem oder mehreren Ventilen entsprechend den Quetschventilen 40 bzw. 40 und 44 versehen sein. Durch diese kann Pulver aus dem Pulversack 2, wenn er sich zusammen mit der Umdreheinheit 6 in der in Fig. 10 gezeigten Kopfüber-Stellung befindet, einem Pulverempfänger zugeführt werden, beispielsweise einem Behälter 41 oder einer oder mehreren Sprühvorrichtungen 46 oder einer weiteren Vorrichtung wie beispielsweise der Vorrichtung 101 von Fig. 8 nach der Erfindung.

Der Pulversack 2 kann sich bei der Ausführungsform nach den Fig. 9, 10 und 11 in einem Behälter 4, z. B. aus Karton, entsprechend den Fig. 1 bis 4 befinden, oder, ebenso wie bei den Fig. 1 bis 4 ohne Behälter 41 auf die Stellfläche 8 der Umdreheinheit 6 gestellt werden. Der Pulversack 2 kann sich entweder an einer Rückwand 6-2 der Umdreheinheit 6 abstützen oder es können zusätzliche Stützen 6-3 und/oder 6-5 an der Umdreheinheit 6 vorgesehen sein, welche den Pulversack 2 mindestens in der Richtung abstützen, in welcher er seine Gewichtskraft beim Drehen um die Drehachse der Lagervorrichtung 49 richtet.

Die in den Pulversack 2 zeigende Oberfläche 212-2 des Aufsatzes 212 kann flach oder trichterförmig oder andersförmig sein, abhängig von der Anzahl und der Form von in ihr gebildeten Öffnungen für eine entsprechende Anzahl von Pulverabgabevorrichtungen 40 bzw. 40-2 bzw. 40, 42, 44. Die Form eines Trichters hat an dem Ende, welches dem Innenraum des Pulversackes 2 zugewandt ist, den größten Querschnitt, und an dem vom Pulversack 2 entfernten Ende einen kleinsten Querschnitt, wie dies Fig. 9 zeigt.

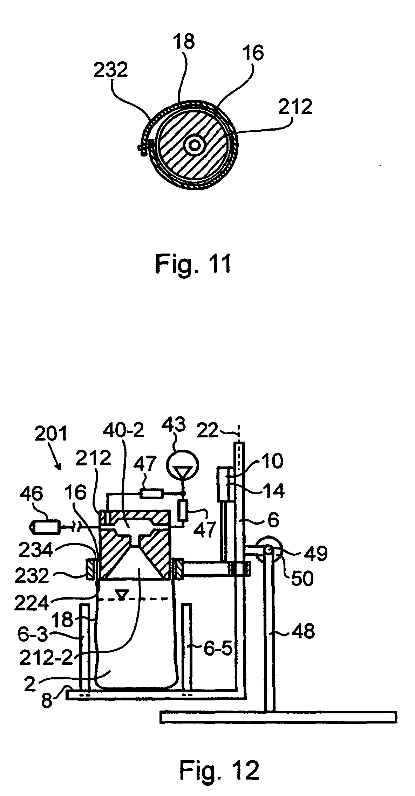

Zur Befestigung der Sackabdeckvorrichtung 212, 323 an der Umdreheinheit 6 kann der Aufsatz 212 und/oder der Spannring 232 mit der Umdreheinheit 6 verbunden und daran fixierbar sein, entweder manuell oder vorzugsweise automatisch, wie dies mit Bezug auf die anderen Figuren beschrieben wurde. Fig. 9 zeigt eine Ausführungsform, bei welcher der Aufsatz 212 über die Hubvorrichtung 14 der Haltevorrichtung 10 an der Umdreheinheit 6 befestigt und höhenverstellbar positionierbar ist. Fig. 12 zeigt eine Ausführungsform, bei welcher der Spannring 232 über die Hubvorrichtung 14 der Haltevorrichtung 10 an der Umdreheinheit 6 höhenverstellbar und fixierbar ist. Fig. 9 zeigt die Vorrichtung 201 in ihrer aufrechten Stellung. Fig. 10 zeigt die gleiche Vorrichtung in ihrer Kopfüber-Stellung. Fig. 12 zeigt die weitere Ausführungsform in der aufrechten Stellung. Fig. 11 zeigt im Horizontalschnitt den Aufsatz 212, den Sackendabschnitt 218 mit der Sacköffnung 16, und den Spannring 232.

Durch die Erfindung wird bei allen Ausführungsformen an einem Pulversack 2 bei aufrechter Sackstellung eine Sackabdeckvorrichtung angebracht, welche bei Kopfüber-Stellung des Pulversackes eine Pulverentnahme ermöglicht, und es ist eine den Pulversack tragende und von der aufrechten Stellung in die Kopfüber-Stellung drehbare Umdreheinheit 6 vorgesehen.

## Patentansprüche

1. Vorrichtung zum dosierten Entnehmen von Beschichtungspulver aus einem Pulversack (2), aufweisend
eine Sackabdeckvorrichtung (12,32;12,32-2;212,232), die eine Pulverabgabevorrichtung (40;40,42,44;40-2) bildet oder mit einer solchen versehen oder versehbar ist;
eine Umdreheinheit (6), welche von einer aufrechten Stellung in eine Kopfüber-Stellung drehbar ist und mit einer Aufnahmevorrichtung (8,12,32;8,12,32-2;8, 6-2,6-3,6-5,212,232) zum Tragen und Halten des Pulversackes (2) versehen ist, so dass der Pulversack (2) mittels der Umdreheinheit (6) von einer aufrechten Stellung in eine Kopfüber-Stellung drehbar ist, und dass die Pulverabgabevorrichtung (40;40,42,44;40-2) zur dosierten Abgabe von Beschichtungspulver aus dem in Kopfüber-Stellung positionierten Pulversack (2) ausgebildet ist,
**dadurch gekennzeichnet,**
**dass** die Sackabdeckvorrichtung (12,32;12,32-2;212,232) zwei rahmenartige Flanschflächen (24,34;224,234) zum Einspannen und dadurch Offenhalten des mit der Sacköffnung (16) versehenen Sackendabschnittes (18) aufweist,
und **dass** die Aufnahmevorrichtung (8,12,32;8,12,32-2;8,6-2,6-3,6-5,212,232) zwei Teile aufweist, welche den Pulversack (2) zwischen sich aufnehmen und von welchen mindestens der eine Teil (12,32;12,32-2;212,232) relativ zum anderen Teil (8;8,6-2,6-3,6-5) in Längsrichtung des Pulversackes (2) höhenverstellbar ist, wobei beide Teile an der Umdreheinheit (6) befestigt oder befestigbar oder fixierbar sind.

2. Vorrichtung nach Anspruch 1,
**dadurch gekennzeichnet,**
**daß** die Sackabdeckvorrichtung (12,32;12,32-2;212,232) auf zwei relativ zueinander bewegbare Abdeckteile (12,32;12,32-2;212,232) unterteilt ist, die relativ zueinander bewegbar sind und von welchen jedes eine der beiden Flanschflächen (24 bzw. 34; 224 bzw. 234) aufweist, und daß die Pulverabgabevorrichtung (40;40,42,44;40-2) an einem der beiden Abdeckteile vorgesehen ist.

3. Vorrichtung nach mindestens einem der vorhergehenden Ansprüche,
**dadurch gekennzeichnet,**
**daß** die Aufnahmevorrichtung der Umdreheinheit (6) eine an der Umdreheinheit vorgesehene Stellfläche (8) zum Stellen des Pulversackes (2) oder eines den Pulversack enthaltenden Behälters (4) aufweist.

4. Vorrichtung nach mindestens einem der vorhergehenden Ansprüche,
**dadurch gekennzeichnet,**
**daß** die Aufnahmevorrichtung eine den Pulversack (2) in der Kopfüber-Stellung tragende Vorrichtung (10,12,14;212,10,14,6-2;212,10,14,6-3,6-5) aufweist.

5. Vorrichtung nach Anspruch 4,
**dadurch gekennzeichnet,**
**daß** die den Pulversack (2) in der Kopfüber-Stellung tragende Vorrichtung mindestens teilweise durch die Sackabdeckvorrichtung (12,32;12,32-2;212,232) gebildet ist.

6. Vorrichtung nach mindestens einem der vorhergehenden Ansprüche,
**dadurch gekennzeichnet,**
**daß** den Pulversack (2) mindestens entgegen seiner Kipprichtung an der Umdreheinheit (6) abstützende Teile (10,12,14;10,14,212,6-2;10,14,212,6-3,6-5; 232,10,14,6-2;232,10,14,6-3,6-5) vorgesehen sind.

7. Vorrichtung nach mindestens einem der vorhergehenden Ansprüche,
**dadurch gekennzeichnet,**
**daß** ein in die Sacköffnung des Pulversackes (2) einsetzbarer Aufsatz (212), welcher mit einer Pulverabgabevorrichtung (40;40,42,44;40-2) versehen oder versehbar ist, und ein Spannrahmen (232) vorgesehen sind, welch letzterer um den Aufsatz spannbar ist, wobei der mit der Sacköffnung versehene Sackendabschnitt (18) zwischen den Aufsatz (212) und den Spannrahmen (232) einspannbar ist, und wobei mindestes einer der beiden Teile Aufsatz und/oder Spannrahmen an der Umdreheinheit (6) befestigt oder befestigbar oder fixierbar ist.

8. Vorrichtung nach mindestens einem der vorhergehenden Ansprüche,
**dadurch gekennzeichnet,**
**daß** die Umdreheinheit (6) eine Stellfläche (8) für den Pulversack (2) und eine Haltevorrichtung (10) aufweist, daß ein Trichter (12) vorgesehen ist, welcher auf den die Sacköffnung (16) bildenden Sackendabschnitt (18) des auf der Stellfläche (8) stehenden Pulversackes (2) oder auf den Öffnungsrand (20) eines den Pulversack (2) enthaltenden Behälters (4) umgekehrt aufsetzbar und im aufgesetzten Zustand mittels der Haltevorrichtung (10) an der Umdreheinheit (6) befestigt oder befestigbar ist, wobei der Trichter (12) in Richtung nach unten, zur Stellfläche (8) hin, einen trichterförmig zunehmend größeren Öffnungsquerschnitt hat und am engeren oberen Trichterende (28) mit einer ringförmigen ersten Flanschfläche (24) versehen ist, wobei der Öffnungsquerschnitt des weiteren unteren Trichterendes (26) mindestens so groß wie der Öffnungsquerschnitt des Pulversackes, und der Öffnungsquerschnitt des engeren oberen Trichterendes (28) und dessen erste Flanschfläche (24) kleiner sind als der Öffnungsquerschnitt des Pulversackes (2), und wobei der Trichter (12) auf einen Höhenabstand von der Stellfläche (8) an der Umdreheinheit (6) positionierbar oder positioniert ist, bei welcher der Sackendabschnitt (18) durch den Trichter (12) hindurch bis über das engere Trichterendes (28) nach oben hinausragt und nach außen über die erste Flanschfläche (14) umlegbar ist, daß ein Aufsatz (32;32-2) vorgesehen ist,
welcher das engere obere Trichterende abschließend ausgebildet ist und eine zweite Flanschfläche (34) aufweist, die auf die erste Flanschfläche (24) aufsetzbar ist zum Einklemmen des umgelegten Teiles (30) des Sackendabschnittes (18) zwischen den beiden Flanschflächen (24,34), daß eine Pulverabgabevorrichtung (40;40-2;40-3,40-4,40-5,40-6;40,42,44) zur dosierten Pulverabgabe aus dem Pulversack am Aufsatz (32;32-2) vorgesehen oder befestigbar ist, daß eine Lagervorrichtung (49) vorgesehen ist, in welcher die Umdreheinheit (6) drehbar gelagert ist und zusammen mit dem Pulversack (2),
welcher zwischen die beiden Flanschflächen (24,34) eingeklemmt und zwischen dem Trichter (12) und der Stellfläche (8) gefangen ist, zwischen der aufrechten Stellung, in welcher die Stellfläche (8) nach oben zeigt, und einer Kopfüber-Stellung drehbar ist, bei welcher die Stellfläche (8) nach unten zeigt, der Pulversack (2) kopfüber im Trichter (1.2) steht ünd die Pulverabgabevorrichtung (40;40-2;40-3,40-4,40-5,40-6;40,42,44) unter der Sacköffnung (16) liegt, die durch das Einklemmen des Sackendabschnittes zwischen den beiden Flanschflächen (24,34) offen gehalten wird.

9. Vorrichtung nach Anspruch 8,
**dadurch gekennzeichnet,**
**daß** die Haltevorrichtung (10) eine Hubvorrichtung (16) aufweist, mit welcher der Trichter (12) an der Umdreheinheit (6) relativ zur Stellfläche (8) höhenverstellbar ist.

10. Vorrichtung nach mindestens einem der vorhergehenden Ansprüche 8 bis 9,
**dadurch gekennzeichnet,**
**daß** der Aufsatz (32) eine trichterförmige Trichterverlängerung (52) des Trichters (12) aufweist, daß die Trichterform der Trichterverlängerung (52) von einem größten Querschnitt bis zu einem kleinsten Querschnitt sich fortlaufend verengt und eine Fortsetzung des Trichters (12) bildet, wenn der Aufsatz (32) auf den Trichter (12) gespannt ist, wobei der größte Querschnitt der Trichterverlängerung (52) dem kleinsten Querschnitt des Trichters (12) angepaßt ist und diesem benachbart ist und wobei der kleinste Querschnitt der Trichterverlängerung (52) an oder nahe bei der Pulverabgabevorrichtung (40;40,42;40-2) liegt.

11. Vorrichtung nach mindestens einem der vorhergehenden Ansprüche 8 bis 10,
**dadurch gekennzeichnet,**
**daß** eine Schnellspannvorrichtung (36) vorgesehen ist, welche einerseits am Trichter (12) auf seiner Außenseite und andererseits auf dem Aufsatz (32;32,32-2) auf dessen Außenseite angreift.

12. Vorrichtung nach Anspruch 11,
**dadurch gekennzeichnet,**
**daß** die Schnellspannvorrichtung (36) eine Spannhebelanordnung (54) aufweist.

13. Vorrichtung nach mindestens einem der vorhergehenden Ansprüche,
**dadurch gekennzeichnet,**
**daß** die Pulverabgabevorrichtung mindestens einen Injektor (40-2) als pneumatische Pulverpumpe aufweist.

14. Vorrichtung nach mindestens einem der vorhergehenden Ansprüche,
**dadurch gekennzeichnet,**
**daß** die Pulverabgabevorrichtung mehrere Injektoren (40-3,40-4,40-5,40-6) aufweist.

15. Vorrichtung nach mindestens einem der Ansprüche 1 bis 12,
**dadurch gekennzeichnet,**
**daß** die Pulverabgabevorrichtung eine Ventileinrichtung (40;40,42,44) aufweist, welche zur gesteuerten Pulverentnahme aus dem Pulversack auf- und zumachbar ist.

16. Vorrichtung nach mindestens einem der vorhergehenden Ansprüche 8 bis 15,
**dadurch gekennzeichnet,**
**daß** die Trichterfläche des Trichters (12) mindestens in ihrem den Pulversäck (2) abstützenden Bereich in Richtung vom weiten Trichterende zum engen Trichterende hin absatzfrei fortlaufend konvergierend ausgebildet ist.

17. Vorrichtung nach mindestens einem der Ansprüche 3 bis 8,
**dadurch gekennzeichnet,**
**daß** der Trichter (12) und/oder die Trichterverlängerung (52) des Aufsatzes (32) absatzfrei fortlaufend konvergierend ausgebildet ist.

18. Vorrichtung nach mindestens einem der vorhergehenden Ansprüche,
**dadurch gekennzeichnet,**
**daß** die Sackabdeckvorrichtung (12,32;12,32-2;212,232) mit einem Luftanschluß (72) zur Zufuhr von Ausgleichsluft in den Pulversack (2) versehen ist, um einen im Pulversack (2) durch entnommenes Beschichtungspulver entstehenden Unterdruck mindestens teilweise auszugleichen.

19. Vorrichtung nach mindestens einem der vorhergehenden Ansprüche,
**dadurch gekennzeichnet,**
**daß** die Sackabdeckvorrichtung (12,32;12,32-2;212,232) mit mindestens einem Pulverzufuhrrohr (93,95) versehen ist, welches sich von dem Aufsatz (32-2) in Richtung zum Trichter (12) und durch den Trichter (12) in den Pulversack (2) erstreckt, daß das mindestens eine Pulverzufuhrrohr (93,95) an seinem von der Sackabdeckvorichtung entfernten Ende einen zurückgebogenen Endabschnitt (94,96) mit einem offenen Rohrende (98,100) aufweist, so daß in der aufrechten Stellung der Umdreheinheit (6) und des Pulversackes (2) beim Aufsetzen der Sackabdeckvorrichtung (12,32;12,32-2;212,232) auf den Pulversack (2), der Endabschnitt des mindestens einen Pulverzufuhrrohres (93,95) in das Beschichtungspulver im Pulversack (2) steckbar ist, ohne daß Pulver in das offene Rohrende (98,100) eingedrückt wird, und so daß in der Kopfüber-Stellung der Umdreheinheit (6) und des Pulversackes (2) kein Pulver aus dem Pulversack (2) in das offene Rohrende (98,100) fallen kann, und daß ein Anschlußmittel (102,104) zum Verbinden des mindestens einen Pulverzufuhrrohres (93,95) mit einer Pulverzufuhrleitung (106,108) vorgesehen ist.

20. Vorrichtung nach Anspruch 19,
**dadurch gekennzeichnet,**
**daß** auf den zurückgebogenen Endabschnitt (94,96) des mindestens einen Pulverzufuhrrohres (93,95) ein sehr weich-flexibles Schlauchstück (110,112) aufgesteckt ist, welches einen über das offene Rohrende (98,100) überstehenden Schlauchabschnitt hat und so weich-flexibel ist, daß der überstehende Schlauchabschnitt durch von außen darauf drückendes Beschichtungspulver zusammendrückbar und dabei automatisch verschließbar ist, jedoch durch einen Pulverstrom wieder aufdrückbar ist, wenn ein solcher Pulverstrom durch das Pulverzufuhrrohr (93,95) in den Pulversack (2) gefördert wird.

21. Vorrichtung nach Anspruch 19 oder 20,
**dadurch gekennzeichnet,**
**daß** die Sackabdeckvorrichtung (12,32;12,32-2;212,232) eine Pulverabgabevorrichtung in Form von zwei oder mehr Injektoren (40-3,40-4,40-5,40-6) enthält als pneumatische Pumpen zur Pulverförderung.

## Claims

1. Apparatus for the metered removal of coating powder from a powder bag (2), having
a bag-covering apparatus (12,32;12,32-2;212,232), which forms or is or can be provided with a powder-dispensing apparatus (40;40,42,44;40-2);
an inverting unit (6), which can be rotated from an upright position into an upside-down position and is provided with a receiving apparatus (8,12,32;8,12,32-2;8,6-2,6-3,6-5,212,232), for carrying and holding the powder bag (2), so that the powder bag (2) can be rotated by means of the inverting unit (6) from an upright position into an upside-down position, and that the powder-dispensing apparatus (40;40,42,44;40-2) is designed for the metered dispensing of coating powder from the powder bag (2) which has been positioned upside down,
**characterized**
**in that** the bag-covering apparatus (12,32;12,32-2; 212,232), has two frame-like flange surfaces (24,34;224,234) for clamping and thereby holding open the bag end portion (18) provided with the bag opening (16),
and **in that** the receiving apparatus (8,12,32;8,12,32-2;8,6-2,6-3,6-5,212,232) has two parts which receive the powder bag (2) between them and of which at least one part (12,32;12,32-2;212,232) is adjustable in height in the longitudinal direction of the powder bag (2) relative to the other part (8;8,6-2,6-3,6-5), the two parts being secured or securable or fixable to the inverting unit (6).

2. Apparatus according to Claim 1, **characterized in that** the bag-covering apparatus (12,32;12,32-2; 212,232) is divided into two covering parts (12,32;12,32-2;212,232), which are movable relative to each other and each of which has one of the two flange surfaces (24 and 34, resp.; 224 and 234, resp.), and **in that** the powder-dispensing apparatus (40;40,42,44;40-2) is provided at one of the two covering parts.

3. Apparatus according to at least one of the preceding claims, **characterized in that** the receiving apparatus of the inverting unit (6) has a supporting surface (8) which is provided at the inverting unit, for supporting the powder bag (2) or a container (4) containing the powder bag.

4. Apparatus according to at least one of the preceding claims, **characterized in that** the receiving apparatus has an apparatus (10,12,14;212,10,14,6-2;212,10,14,6-3,6-5) which supports the powder bag (2) in the upside-down position.

5. Apparatus according to Claim 4, **characterized in that** the apparatus which supports the powder bag (2) in the upside-down position is at least partially formed by the bag-covering apparatus (12,32;12,32-2;212,232).

6. Apparatus according to at least one of the preceding claims, **characterized in that** parts (10,12,14;10,14,212,6-2;10,14,212,6-3,6-5;232,10, 14,6-2;232,10,14,6-3,6-5) are provided which support the powder bag (2) at the inverting unit (6) at least against its tilting direction.

7. Apparatus according to at least one of the preceding claims, **characterized in that** a top (212), which can be inserted into the bag opening of the powder bag (2) and is or can be provided with a powder-dispensing apparatus (40;40,42,44;40-2), and a clamping frame (232) are provided, the clamping frame being clampable around the top, the bag end portion (18) provided with the bag opening being clampable between the top (212) and the clamping frame (232), and at least one of the two parts, i.e. top and/or clamping frame, being secured or securable or fixable to the inverting unit (6).

8. Apparatus according to at least one of the preceding claims, **characterized in that** the inverting unit (6) has a supporting surface (8) for the powder bag (2) and a holding apparatus (10), **in that** a funnel (12) is provided, which funnel can be fitted in an inverted position onto the bag end portion (18), forming the bag opening (16) of the powder bag (2) positioned on the supporting surface (8) or onto the opening edge (20) of a container (4) containing the powder bag (2), and is or can be secured to the inverting unit (6) in the fitted state by means of the holding apparatus (10), the funnel (12) having an opening cross section which increases in size in a funnel shape in the downwards direction, towards the supporting surface (8) and being provided at the narrower, upper end (28) of the funnel with an annular, first flange surface (24), the opening cross section of the further, lower end (26) of the funnel being at least as large as the opening cross section of the powder bag, and the opening cross section of the narrower, upper end (28) of the funnel and the first flange surface (24) of the latter being smaller than the opening cross section of the powder bag (2), and the funnel (12) being positionable or positioned at the inverting unit (6) at a vertical distance from the supporting surface (8), wherein the bag end portion (18) projects upwards through the funnel (12) past the narrower end (28) of the funnel and can be folded outwards over the first flange surface (14), **in that** a top (32;32-2) is provided, which top is designed to close off the narrower, upper end of the funnel and has a second flange surface (34), which can be fitted onto the first flange surface (24) in order to clamp the folded-over part (30) of the bag end portion (18) between the two flange surfaces (24,34), **in that** a powder-dispensing apparatus (40;40-2;40-3,40-4,40-5,40-6;40,42,44) for the metered dispensing of powder from the powder bag is provided or can be secured to the top (32;32-2), **in that** a bearing apparatus (49) is provided, in which the inverting unit (6) is rotatably supported and can be rotated, together with the powder bag (2) which is clamped between the two flange surfaces (24,34) and is trapped between the funnel (12) and the supporting surface (8), between the upright position, in which the supporting surface (8) faces upwards, and an upside-down position, in which the supporting surface (8) faces downwards, the powder bag (2) is positioned upside-down in the funnel (12) and the powder-dispensing apparatus (40;40-2;40-3,40-4,40-5,40-6;40,42,44) is beneath the bag opening (16), which is held open by virtue of the fact that the bag end portion is clamped between the two flange surfaces (24,34).

9. Apparatus according to Claim 8, **characterized in that** the holding apparatus (10) has a lifting apparatus (16), by means of which the height of the funnel (12) at the inverting unit (6) can be adjusted relative to the supporting surface (8).

10. Apparatus according to at least one of the preceding Claims 8 to 9, **characterized in that** the top (32) has a funnel-shaped funnel extension (52) of the funnel (12), **in that** the funnel shape of the funnel extension (52) narrows continuously from a maximum cross section to a minimum cross section and forms a continuation of the funnel (12) when the top (32) is clamped onto the funnel (12), the maximum cross section of the funnel extension (52) being matched to the minimum cross section of the funnel (12) and adjoining the latter, and the minimum cross section of the funnel extension (52) is located at or in the vicinity of the powder-dispensing apparatus (40;40,42;40-2).

11. Apparatus according to at least one of the preceding Claims 8 to 10, **characterized in that** a quick-acting clamping apparatus (36) is provided and acts on the one hand on the outer side of the funnel (12) and on the other hand on the outer side of the top (32;32,32-2).

12. Apparatus according to Claim 11, **characterized in that** the quick-acting clamping apparatus (36) has a clamping lever arrangement (54).

13. Apparatus according to at least one of the preceding claims, **characterized in that** the powder-dispensing apparatus has at least one injector (40-2) as a pneumatic powder pump.

14. Apparatus according to at least one of the preceding claims, **characterized in that** the powder-dispensing apparatus has a plurality of injectors (40-3,40-4,40-5,40-6).

15. Apparatus according to at least one of Claims 1 to 12, **characterized in that** the powder-dispensing apparatus has a valve device (40;40,42,44) which can be opened and closed for controlled removal of powder from the powder bag.

16. Apparatus according to at least one of the preceding Claims 8 to 15, **characterized in that** the funnel surface of the funnel (12), at least in its region supporting the powder bag (2), is designed to converge continuously, without any sudden steps, in the direction from the wide end of the funnel towards the narrow end of the funnel.

17. Apparatus according to at least one of Claims 3 to 8, **characterized in that** the funnel (12) and/or the funnel extension (52) of the top (32) is designed to converge continuously without any sudden steps.

18. Apparatus according to at least one of the preceding claims, **characterized in that** the bag-covering apparatus (12,32;12,32-2;212,232) is provided with an air connection (72) for feeding compensation air into the powder bag (2) in order to at least partially compensate for a pressure reduction produced in the powder bag (2) by the removal of coating powder.

19. Apparatus according to at least one of the preceding claims, **characterized in that** the bag-covering apparatus (12,32;12,32-2;212,232) is provided with at least one powder-feed tube (93, 95) which extends from the top (32-2) towards the funnel (12) and through the funnel (12) into the powder bag (2), **in that** the at least one powder-feed tube (93, 95), at its end distant from the bag-covering apparatus, has a bent-back end portion (94, 96) with an open tube end (98, 100), so that in the upright position of the inverting unit (6) and the powder bag (2), when the bag-covering apparatus (12,32;12,32-2;212,232) is being fitted onto the powder bag (2), the end portion of the at least one powder-feed tube (93, 95) can be fitted into the. coating powder in the powder bag (2) without powder being forced into the open tube end (98, 100), and so that in the upside-down position of the inverting unit (6) and the powder bag (2) it is impossible for any powder to drop out of the powder bag (2) into the open tube end (98, 100), and **in that** there is a connection means (102, 104) for connecting the at least one powder-feed tube (93, 95) to a powder-feed line (106, 108).

20. Apparatus according to Claim 19, **characterized in that** a very soft and flexible hose piece (110, 112) is fitted onto the bent-back end portion (94, 96) of the at least one powder-feed tube (93, 95), which hose piece has a hose portion projecting beyond the open tube end (98, 100) and is so soft and flexible that the projecting hose portion can be compressed by coating powder pressing onto the outside of it and can thereby be closed up automatically, but can be forced open again by a flow of powder when such a flow of powder is delivered through the powder-feed tube (93, 95) into the powder bag (2).

21. Apparatus according to Claim 19 or 20, **characterized in that** the bag-covering apparatus (12,32;12,32-2;212,232) includes a powder-dispensing apparatus in the form of two or more injectors (40-3,40-4,40-5,40-6) as pneumatic pumps for delivering powder.

## Revendications

1. Dispositif pour prélever de manière dosée de la poudre de revêtement hors d'un sac de poudre (2), présentant
un dispositif de recouvrement de sac (12, 32 ; 12, 32-2 ; 212, 232), qui forme un dispositif de distribution de poudre (40 ; 40, 42, 44 ; 40-2) ou qui est ou peut être pourvu d'un tel dispositif ;
une unité de retournement (6) qui peut être tournée d'une position debout dans une position tête en bas et qui est pourvue d'un dispositif de réception (8, 12, 32 ; 8, 12, 32-2 ; 8, 6-2, 6-3, 6-5, 212, 232) pour porter et retenir le sac de poudre (2), de sorte que le sac de poudre (2) puisse être tourné au moyen de l'unité de retournement (6) d'une position debout dans une position tête en bas, et de telle sorte que le dispositif de distribution de poudre (40 ; 40, 42, 44 ; 40-2) soit réalisé pour distribuer de manière dosée de la poudre de revêtement hors du sac de poudre (2) positionné dans la position tête en bas,
**caractérisé en ce que**
le dispositif de recouvrement de sac (12, 32 ; 12, 32-2 ; 212, 232) présente deux faces de bride de type cadre (23, 34 ; 224, 234) pour le serrage et de ce fait pour maintenir ouverte la portion d'extrémité du sac (18) pourvue de l'ouverture du sac (16), et **en ce que** le dispositif de réception (8, 12, 32 ; 8, 12, 32-2 ; 8, 6-2, 6-3, 6-5, 212, 232) présente deux parties qui reçoivent entre elles le sac de poudre (2) et dont au moins une partie (12, 32 ; 12, 32-2 ; 212, 232) peut être ajustée en hauteur par rapport à l'autre partie (8 ; 8, 6-2, 6-3, 6-5) dans la direction longitudinale du sac de poudre (2), les deux parties étant fixées ou pouvant être fixées à l'unité de retournement (6).

2. Dispositif selon la revendication 1,
**caractérisé en ce que**
le dispositif de recouvrement de sac (12, 32 ; 12, 32-2 ; 212, 232) est divisé en deux parties de recouvrement déplaçables l'une par rapport à l'autre (12, 32 ; 12, 32-2 ; 212, 232) qui peuvent se déplacer l'une par rapport à l'autre et dont chacune présente une des deux faces de brides (24, respectivement 34 ; 224, respectivement 234) et **en ce que** le dispositif de distribution de poudre (40 ; 40, 42, 44 ; 40-2) est prévu sur l'une des deux parties de recouvrement.

3. Dispositif selon au moins l'une quelconque des revendications précédentes,
**caractérisé en ce que**
le dispositif de réception de l'unité de retournement (6) présente une face de positionnement (8) prévue sur l'unité de retournement pour positionner le sac de poudre (2) ou un récipient (4) contenant le sac de poudre.

4. Dispositif selon au moins l'une quelconque des revendications précédentes,
**caractérisé en ce que**
le dispositif de réception présente un dispositif (10, 12, 14 ; 212, 10, 14, 6-2 ; 212, 10, 14, 6-3, 6-5) portant le sac de poudre (2) dans la position tête en bas.

5. Dispositif selon la revendication 4,
**caractérisé en ce que**
le dispositif portant le sac de poudre (2) dans la position tête en bas est formé au moins en partie par le dispositif de recouvrement de sac (12, 32 ; 12, 32-2 ; 212, 232).

6. Dispositif selon au moins l'une quelconque des revendications précédentes,
**caractérisé en ce que**
l'on prévoit des parties (10, 12, 14 ; 10, 14, 212, 6-2 ; 10, 14, 212, 6-3, 6-5 ; 232, 10, 14, 6-2 ; 10, 14, 6-3, 6-5) supportant le sac de poudre (2) contre l'unité de retournement (6) au moins à l'encontre de sa direction de basculement.

7. Dispositif selon au moins l'une quelconque des revendications précédentes,
**caractérisé en ce que**
l'on prévoit un couvercle (212) pouvant être inséré dans l'ouverture du sac de poudre (2), le couvercle est pourvu ou peut être prévu d'un dispositif de distribution de poudre (40 ; 40, 42, 44 ; 40-2), et un cadre de serrage (232), ce dernier pouvant être serré autour du couvercle, la portion d'extrémité du sac (18) pourvue de l'ouverture du sac pouvant être serrée entre le couvercle (212) et le cadre de serrage (232), et au moins l'une des deux parties, couvercle et/ou cadre de serrage, étant fixée ou pouvant être fixée sur l'unité de retournement (6).

8. Dispositif selon au moins l'une quelconque des revendications précédentes,
**caractérisé en ce que** l'unité de retournement (6) présente une face de positionnement (8) pour le sac de poudre (2) et un dispositif de maintien (10), **en ce qu'**il est prévu une trémie (12) qui peut être placée à l'envers sur la portion d'extrémité du sac (18) formant l'ouverture du sac (16) du sac de poudre (2) se trouvant sur la face de positionnement (8) ou sur le bord d'ouverture (20) d'un récipient (4) contenant le sac de poudre (2) et qui est fixée ou qui peut être fixée dans l'état posé au moyen du dispositif de maintien (10) sur l'unité de retournement (6), la trémie (12) ayant dans la direction orientée vers le bas, vers la face de positionnement (8), une section transversale d'ouverture de plus en plus grande en forme de trémie et, à l'extrémité de la trémie (28) supérieure plus étroite, étant pourvue d'une première face de bride (24) de forme annulaire, la section transversale d'ouverture de l'autre extrémité inférieure de la trémie (26) étant au moins aussi grande que la section transversale d'ouverture du sac de poudre, et la section transversale d'ouverture de l'extrémité de trémie (28) supérieure plus étroite et celle de sa première face de bride (24) étant inférieures à la section transversale d'ouverture du sac de poudre (2), et la trémie (12) étant positionnée ou pouvant être positionnée à une distance en hauteur de la face de positionnement (8) sur l'unité de retournement (6), la portion d'extrémité du sac (18) dépassant à travers la trémie (12) vers le haut jusqu'au-dessus de l'extrémité de la trémie plus étroite (28) et pouvant être renversée vers l'extérieur par le biais de la première face de bride (14), **en ce qu'**un couvercle (32 ; 32-2) est prévu, lequel est réalisé de manière à fermer l'extrémité de la trémie supérieure plus étroite et présente une deuxième face de bride (34), qui peut être placée sur la première face de bride (24) pour serrer la partie entourée (30) de la portion d'extrémité du sac (18) entre les deux faces de bride (24, 34), **en ce qu'**un dispositif de distribution de poudre (40 ; 40-2 ; 40-3, 40-4, 40-5, 40-6 ; 40, 42, 44) est prévu ou peut être fixé sur le couvercle (32 ; 32-2) pour distribuer de manière dosée de la poudre hors du sac de poudre, **en ce que** l'on prévoit un dispositif de palier (49) dans lequel l'unité de retournement (6) est montée à rotation et peut tourner, conjointement avec le sac de poudre (2), qui est serré entre les deux faces de bride (24, 34) et est pris entre la trémie (12) et la face de positionnement (8), entre la position debout, dans laquelle la face de positionnement (8) est tournée vers le haut, et une position tête en bas, dans laquelle la face de positionnement (8) est tournée vers le bas, le sac de poudre (2) se trouve tête en bas dans la trémie (12) et le dispositif de distribution de poudre (40 ; 40-2 ; 40-3, 40-4, 40-5, 40-6 ; 40, 42, 44) se trouve sous l'ouverture du sac (16) qui est maintenue ouverte par le serrage de la portion d'extrémité du sac entre les deux faces de bride (24, 34).

9. Dispositif selon la revendication 8,
**caractérisé en ce que**
le dispositif de maintien (10) présente un dispositif de levage (16) avec lequel la trémie (12) peut être ajustée en hauteur sur l'unité de retournement (6) par rapport à la face de positionnement (8).

10. Dispositif selon au moins l'une quelconque des revendications précédentes 8 à 9,
**caractérisé en ce que**
le couvercle (32) présente une prolongation (52) de la trémie (52) en forme de trémie, **en ce que** la forme de trémie de la prolongation de la trémie (52) se rétrécit progressivement depuis une section transversale maximale jusqu'à une section transversale minimale et forme une prolongation de la trémie (12), lorsque le couvercle (32) est serré sur la trémie (12), la section transversale maximale de la prolongation de la trémie (52) étant adaptée à la section transversale minimale de la trémie (12) et étant adjacente à celle-ci, et la section transversale minimale de la prolongation de la trémie (52) se trouvant au ou à proximité du dispositif de distribution de poudre (40 ; 40, 42 ; 40-2).

11. Dispositif selon au moins l'une quelconque des revendications précédentes 8 à 10,
**caractérisé en ce que**
l'on prévoit un dispositif de serrage rapide (36) qui vient en prise d'une part sur la trémie (12) sur son côté extérieur et d'autre part sur le couvercle (32 ; 32, 32-2) sur son côté extérieur.

12. Dispositif selon la revendication 11,
**caractérisé en ce que**
le dispositif de serrage rapide (36) présente un agencement de levier de serrage (54).

13. Dispositif selon au moins l'une quelconque des revendications précédentes,
**caractérisé en ce que**
le dispositif de distribution de poudre présente au moins un injecteur (40-2) servant de pompe à poudre pneumatique.

14. Dispositif selon au moins l'une quelconque des revendications précédentes,
**caractérisé en ce que**
le dispositif de distribution de poudre présente plusieurs injecteurs (40-3, 40-4, 40-5, 40-6).

15. Dispositif selon au moins l'une quelconque des revendications 1 à 12,
**caractérisé en ce que**
le dispositif de distribution de poudre présente un dispositif de soupape (40 ; 40, 42, 44) qui peut être ouvert et fermé pour prélever de manière commandée de la poudre hors du sac de poudre.

16. Dispositif selon au moins l'une quelconque des revendications précédentes 8 à 15,
**caractérisé en ce que**
la face de trémie de la trémie (12) est réalisée au moins dans sa région supportant le sac de poudre (2) de manière à converger en continu et sans échelon dans la direction allant de l'extrémité large de la trémie vers l'extrémité étroite de la trémie.

17. Dispositif selon au moins l'une quelconque des revendications 3 à 8,
**caractérisé en ce que**
la trémie (12) et/ou la prolongation de la trémie (52) du couvercle (32) est réalisée de manière à converger en continu et sans échelon.

18. Dispositif selon au moins l'une quelconque des revendications précédentes,
**caractérisé en ce que**
le dispositif de recouvrement de sac (12, 32 ; 12, 32-2 ; 212, 232) est pourvu d'un raccord d'air (72) pour l'alimentation d'air de compensation dans le sac de poudre (2) afin de compenser au moins partiellement la dépression se formant dans le sac de poudre (2) du fait du retrait de la poudre de revêtement.

19. Dispositif selon au moins l'une quelconque des revendications précédentes,
**caractérisé en ce que**
le dispositif de recouvrement de sac (12, 32 ; 12, 32-2 ; 212, 232) est pourvu d'au moins un tube d'alimentation de poudre (93, 95) qui s'étend depuis le couvercle (32-2) dans la direction de la trémie (12) et à travers la trémie (12) dans le sac de poudre (2), **en ce que** l'au moins un tube d'alimentation de poudre (93, 95) présente à son extrémité éloignée du dispositif de recouvrement de sac une portion d'extrémité (94, 96) recourbée avec une extrémité de tube ouverte (98, 100), de sorte que dans la position debout de l'unité de retournement (6) et du sac de poudre (2) lors du positionnement du dispositif de recouvrement de sac (12, 32 ; 12, 32-2 ; 212, 232) sur le sac de poudre (2), la portion d'extrémité de l'au moins un tube d'alimentation de poudre (93, 95) puisse être enfoncée dans la poudre de revêtement dans le sac de poudre (2) sans que de la poudre ne soit pressée dans l'extrémité de tube ouverte (98, 100) et de sorte que dans la position tête en bas de l'unité de retournement (6) et du sac de poudre (2) de la poudre ne puisse pas tomber hors du sac de poudre (2) dans l'extrémité de tube ouverte (98, 100) et **en ce qu'**un moyen de raccordement (102, 104) est prévu pour connecter l'au moins un tube d'alimentation de poudre (93, 95) à une conduite d'alimentation de poudre (106, 108).

20. Dispositif selon la revendication 19,
**caractérisé en ce que**
l'on enfiche sur la portion d'extrémité recourbée (94, '96) de l'au moins un tube d'alimentation de poudre (93, 95) un tronçon de tuyau très doux-flexible (110, 112) qui a une portion de tuyau dépassant de l'extrémité de tube ouverte (98, 100) et qui est suffisamment doux-flexible pour que la portion de tuyau dépassant puisse être comprimée par la poudre de revêtement pressant sur elle depuis l'extérieur et puisse de ce fait être fermée automatiquement, mais puisse toutefois être à nouveau ouverte par pression par un flux de poudre lorsqu'un tel flux de poudre est acheminé à travers le tube d'alimentation de poudre (93, 95) dans le sac de poudre (2).

21. Dispositif selon la revendication 19 ou 20,
**caractérisé en ce que**
le dispositif de recouvrement de sac (12, 32 ; 12, 32-2 ; 212, 232) contient un dispositif de distribution de poudre sous la forme de deux injecteurs ou plus (40-3, 40-4, 40-5, 40-6) en tant que pompes pneumatiques pour l'alimentation de poudre.
